# FASCICULE DE BREVET EUROPEEN

(11) **EP 2 153 038 B1**
(45) Date de publication et mention de la délivrance du brevet: **12.09.2012**
(21) Numéro de dépôt: 07788891.5
(22) Date de dépôt: 13.06.2007
(51) Int. Cl.: F01N 13/18, F16C 33/12, F16L 27/06

(54) **JOINT COMPORTANT UN ELEMENT DE GLISSEMENT A MULTICOUCHE ET PROCEDE DE REALISATION ASSOCIE**
EIN MEHRLAGIGES SCHIEBEGLIED ENTHALTENDE DICHTUNG UND ENTSPRECHENDES HERSTELLUNGSVERFAHREN
SEAL INCLUDING A MULTILAYERED SLIDING MEMBER AND RELATED MANUFACTURING METHOD

(43) Date de publication de la demande: 17.02.2010
(73) Titulaire: ACC- La Jonchere, 92000 Nanterre (FR)
(72) Inventeur: LAUBIE, Charles, 1050 Bruxelles (BE)
(74) Mandataire: Dossmann, Gérard
(86) Numéro de dépôt international: PCT/FR2007/000987
(87) Numéro de publication internationale: WO 2008/152211

(56) Documents cités:
- DE-A1- 2 935 414
- DE-A1- 3 510 705
- GB-A- 2 327 202
- JP-A- 8 277 711

## Description

L'invention concerne les raccords articulés et plus particulièrement les éléments de glissement de tels raccords.

Les raccords articulés sont utilisés lorsqu'il est nécessaire de permettre, ponctuellement, un débattement angulaire entre deux conduites.

La demande de brevet international WO02/084164 divulgue un raccord rotulaire comprenant un embout femelle présentant une extrémité sensiblement sphérique, un embout mâle, un organe élastique de poussée, des bagues intérieure et extérieure permettant de maintenir les différentes pièces en position.

La bague intérieure est située notamment entre l'extrémité sensiblement sphérique et l'épaulement. Ladite bague assure le glissement de la partie sphérique de l'embout femelle par rapport aux autres pièces. La bague intérieure est monobloc et présente une grande sensibilité aux sollicitations extérieures. De telles sollicitations sont à l'origine de fissures et d'un écaillage de ladite bague intérieure et/ou de ladite bague extérieure.

La demande de brevet GB 2 327 202 décrit une structure composite permettant de réaliser des coussinets de frottement de formes variées. Le composite comprend une armature en grillage métallique, incrusté dans une couche de graphiste, en présence de liants (résines), et de lubrifiants à base de fluorures, nitrures ou sulfures. L'épaisseur du coussinet est au moins égale à l'épaisseur du grillage métallique, ou encore au moins égale à l'épaisseur de la couche de graphite, soit 0,2mm. Le coussinet peut être intégré à un joint pour conduite gazeuse. Le document affirme ainsi améliorer des propriétés d'amortissement et de tenue en température du coussinet par rapport aux coussinets existants.

Le coussinet ainsi réalisé présente une faible dureté, comparable à celle du graphite, et qui est insuffisante pour certaines applications.

Un but de l'invention est de remédier aux problèmes d'écaillage de l'élément assurant le glissement.

Un autre but de l'invention est de proposer une interface de glissement de dureté de surface élevée et d'épaisseur réduite.

Selon un mode de réalisation, un joint destiné, notamment, à relier entre elles deux conduites d'écoulement de fluide ou gazeux, comprend:
un embout femelle présentant une première extrémité,
un embout mâle présentant une deuxième extrémité, l'embout mâle étant reçu dans l'embout femelle.

Ledit joint comprend un élément de glissement situé entre la première extrémité de l'embout femelle et la deuxième extrémité de l'embout mâle, ledit élément de glissement comprenant un empilement d'au moins deux couches d'un matériau intermétallique, permettant d'éviter la propagation d'une fissure d'une couche à la couche suivante.

L'élément de glissement peut comprendre au moins une couche à base de TiAlN ou un équivalent en termes de propriétés tribologiques.

L'élément de glissement peut comprendre au moins une couche à base de AlCrN ou un équivalent en termes de propriétés tribologiques.

Le nombre de couches empilées comprises dans ladite élément de glissement peut être compris entre 1000 et 10000, de préférence entre 2500 et 3500 couches.

L'épaisseur moyenne des couches empilées comprises dans ledit élément de glissement est comprise entre 0.5nm et 5 nm, de préférence comprise entre 0.7nm et 2nm.

Selon un autre aspect, on définit un procédé de réalisation d'un élément de glissement d'un joint destiné, notamment, à relier entre elles deux conduites d'écoulement de fluide ou gazeux comprenant:
un embout femelle présentant une première extrémité,
un embout mâle présentant une deuxième extrémité, l'embout mâle étant reçu dans l'embout femelle, et
un soufflet métallique interposé entre ledit embout femelle et ledit embout mâle.

On forme un élément de glissement situé entre l'extrémité de l'embout femelle et l'extrémité de l'embout mâle en déposant de multiples couches de matériaux intermétalliques. Les couches peuvent être par exemple du TiAlN, ou du AICrN, déposées en 2500 à 3500 couches empilées de 0.7 à 2 nm d'épaisseur moyenne.

On peut réaliser le dépôt de couches empilées comprises dans l'élément de glissement, l'épaisseur moyenne des couches empilées comprises dans ledit élément de glissement étant comprise entre 0.5 et 5 nm, de préférence comprise entre 0.7 à 2 nm.

Le joint peut être appliqué à un aéronef.

Le joint peut être un joint rotule permettant une rotation selon au moins un axe.

Le joint peut être un joint linéaire permettant une translation.

D'autres buts, caractéristiques et avantages de l'invention apparaîtront à la lecture de la description suivante, donnée uniquement à titre d'exemple non limitatif et faite en référence aux dessins annexés sur lesquels :

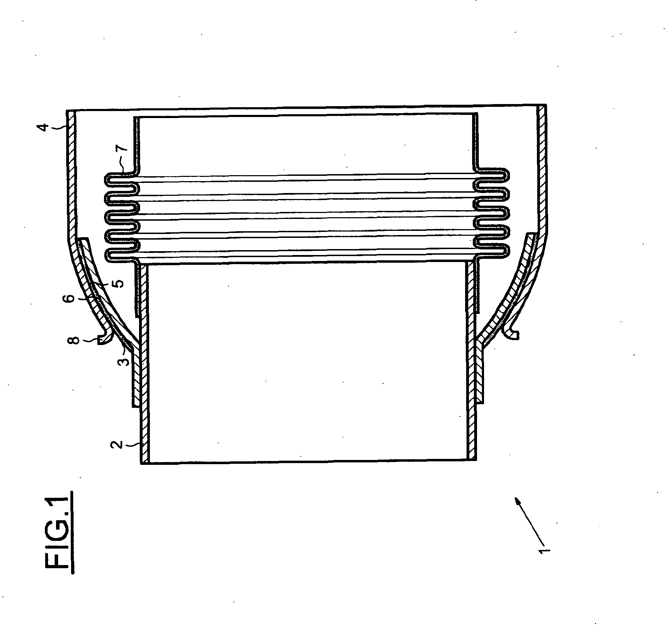

- la figure 1 illustre une vue en coupe d'un raccord rotulaire ;
- la figure 2 montre l'écaillage d'un élément de glissement réalisée selon l'art antérieur ;
- la figure 3 montre la résistance à l'écaillage d'un élément de glissement réalisée selon l'invention ;
- la figure 4 montre une vue en coupe d'un mode de réalisation d'un raccord en translation ; et
- la figure 5 montre une vue en coupe d'un autre mode de réalisation d'un raccord en translation.

Un raccord rotulaire 1 comprend un embout mâle 2 et un embout femelle 4.

L'embout mâle 2 présente une forme cylindrique se terminant par une partie évasée. La première surface 3 correspond à la surface extérieure de la partie évasée.

L'embout femelle 4 présente une forme cylindrique se terminant par une partie convergente. Une deuxième surface 5 correspond à la surface intérieure de la partie convergente.

La partie évasée de l'embout mâle 2 pénètre dans la partie convergente de l'embout femelle 4. Afin d'assurer la coopération des parties évasée et convergente, la première surface 3 et la deuxième surface 5 présentent des formes complémentaires. De plus, pour assurer l'étanchéité du raccord, la première surface 3 présente un contact continu avec la deuxième surface 5. La forme de ce contact dépend des formes respectives de la première surface 3 et de la deuxième surface 5.

Les première et deuxième surfaces glissent l'une par rapport à l'autre grâce à un élément de glissement 6, solidaire de l'embout mâle 2 et disposé sur la surface extérieure de la partie évasée dudit embout mâle 2. Un soufflet métallique 7 assure l'étanchéité du raccord entre l'embout mâle 2 et l'embout femelle 4. L'embout mâle 2 et l'embout femelle 4 peuvent être réalisés en tôle à base d'acier, d'alliage de nickel, de titane, de magnésium ou d'aluminium.

Lorsqu'un mouvement est imprimé au raccord rotulaire 1, les première et deuxième surfaces se déplacent l'une par rapport à l'autre, selon deux axes de liberté. Une position limite de ce mouvement est définie lorsque la butée 8 située à l'extrémité libre de l'embout femelle 4 est en contact avec l'embout mâle 2. Par symétrie autour de l'axe A-A' et pour les deux axes de liberté de l'articulation, on définit deux couples de deux positions extrêmes, chaque couple définissant les bornes du mouvement selon un axe de liberté. L'élément de glissement 6 réalisant l'interface entre ces deux surfaces semi sphériques doit posséder une extension suffisamment importante pour couvrir toute la surface accessible lors du mouvement.

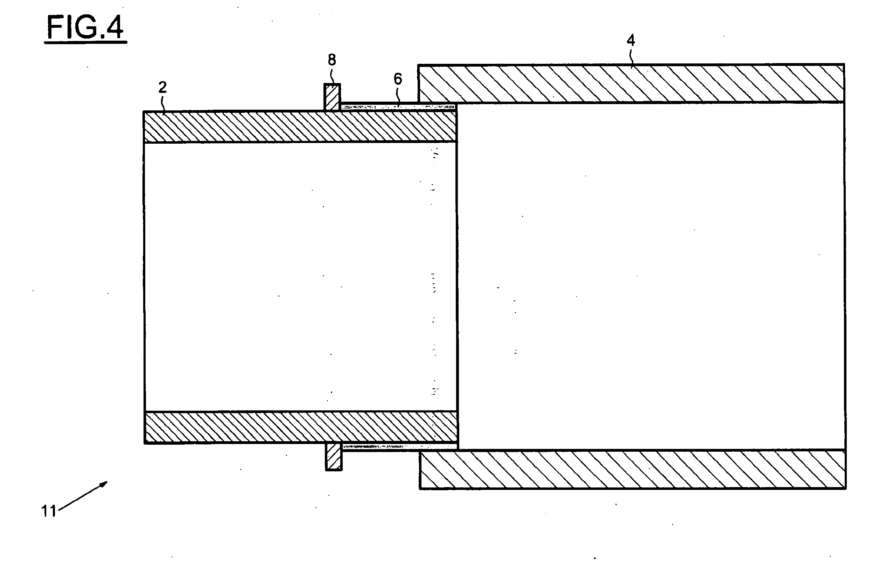

Les mêmes principes de fonctionnement peuvent être appliqués à un raccord en translation 11. Dans un tel raccord visible sur la figure 4, l'embout mâle 2 et l'embout femelle 4, disposés coaxialement, coulissent l'un par rapport à l'autre selon un axe commun ; l'embout femelle 4 présentant un diamètre plus important que l'embout mâle 2 mais suffisamment faible pour assurer le contact avec la surface extérieure dudit embout mâle 2. L'élément de glissement 6 est alors situé entre les zones communes des embouts mâle et femelle. Ledit élément de glissement 6 recouvre la surface extérieure de l'embout mâle 2 et s'étend de telle sorte à assurer l'interface entre l'embout mâle 2 et l'embout femelle 4 lors d'un recouvrement maximal entre les deux embouts, c'est-à-dire lorsque l'embout mâle 2 est dans sa position extrême à l'intérieur de l'embout femelle 4, l'embout femelle 4 au contact de la butée 8 solidaire de l'embout mâle 2.

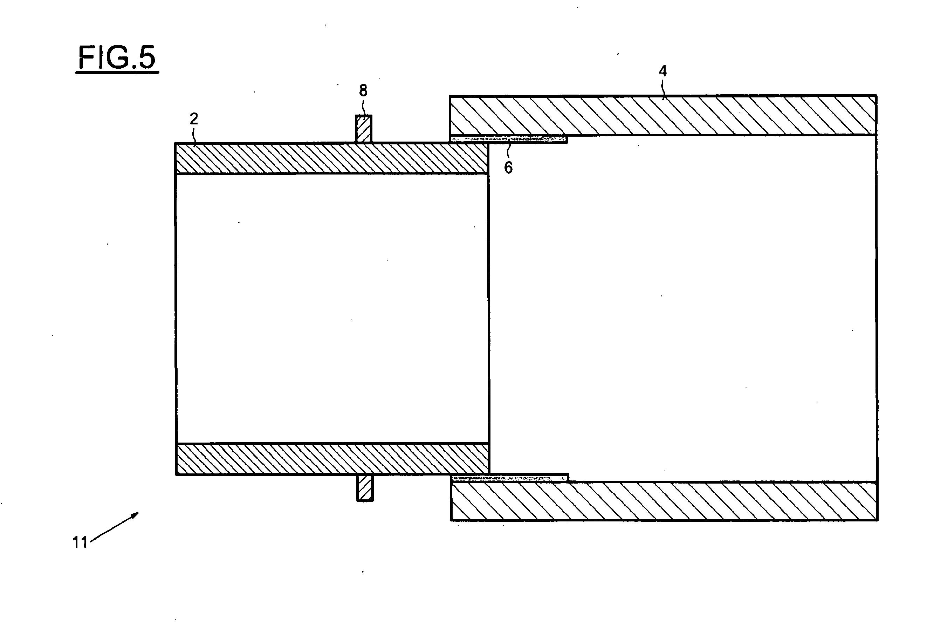

Alternativement, comme on peut le voir sur la figure 5, l'élément de glissement peut être disposé sur la surface intérieure de l'embout femelle 4, sur une profondeur à partir de l'ouverture de l'embout femelle 4 égale à la distance entre l'extrémité de l'embout mâle 2 et la butée 8. Des éléments de glissement peuvent être disposés sur l'embout femelle 4 et sur l'embout mâle 2.

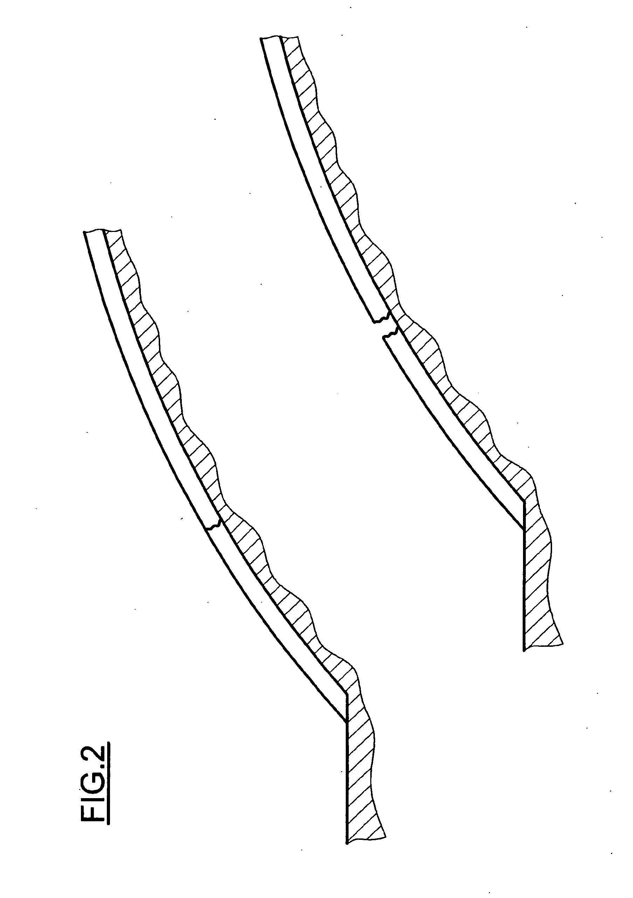

Dans le cas d'un élément de glissement réalisé d'un seul bloc, lors de l'utilisation du raccord rotulaire, outre les frottements dus à l'utilisation normale du raccord rotulaire, des chocs et vibrations pourraient être exercés par l'environnement. De telles sollicitations peuvent être à l'origine de phénomènes de cisaillement ou de poinçonnage de l'élément de glissement 6 générant des fissures dans le dit élément. Ces fissures pourraient se propager alors dans l'élément de glissement 6, de la surface d'origine de la fissure jusqu'à la surface opposée. Avec le temps et la multiplication des fissures, un phénomène d'écaillage apparaît, comme illustré sur la figure 2. L'élément de glissement perd alors une partie de ces propriétés de surface, notamment une élévation du coefficient de friction. Un tel vieillissement peut être à l'origine de grippements et, à terme, d'un changement du raccord rotulaire.

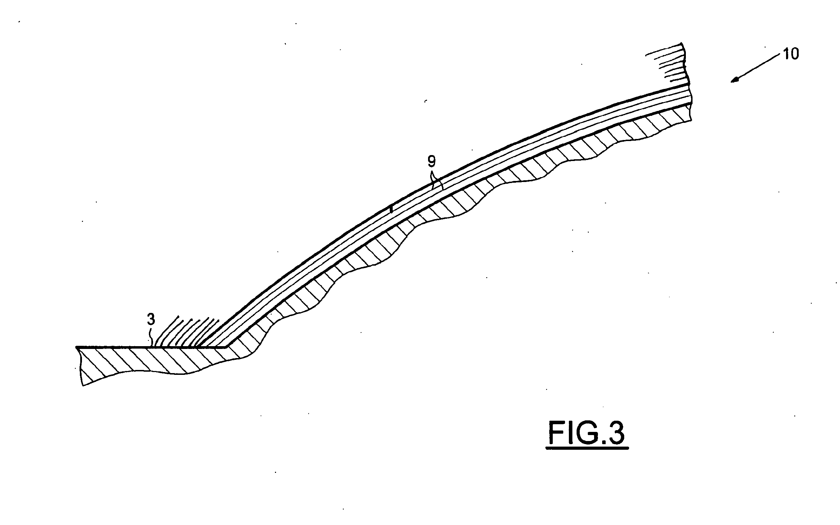

L'élément de glissement réalisé d'après l'invention peut présenter les mêmes épaisseurs et surfaces qu'un élément classique. Il s'en différencie en proposant une structure multicouche comprenant entre 1000 et 10000 couches nanométriqucs. Ces couches manométriques présentent une épaisseur comprise entre 0.5 et 5nm. Un exemple d'un tel élément est représenté sur la figure 3.

La réalisation de couches de faible épaisseur mais de grande qualité structurale permet d'exalter les propriétés physiques desdites couches. Ainsi des propriétés comme la dureté, la résistance aux chocs, ou le coefficient de frottement sont améliorées par rapport à un dépôt classique. De plus, le dépôt en couches successives fait apparaître des interfaces entre lesdites couches.

Alternativement, il est possible de réaliser une multicouche en intercalant des couches de deux matériaux différents. En jouant sur la complémentarité des propriétés physiques des deux matériaux, il est possible d'obtenir une multicouche exhibant le meilleur des deux matériaux. Par exemple, un matériau de dureté et de coefficient de frottement faible peut être associé à un matériau plus mou et capable d'absorber les chocs.

Par ailleurs, il est également possible d'associer deux matériaux présentant des caractéristiques physiques semblables, par exemple dureté et coefficient de frottement, mais n'ayant pas d'affinité chimique réciproque afin de renforcer les propriétés structurelles. La multicouche conserve ainsi ses propriétés globales mais possède des interfaces plus franches, améliorant la séparation mécanique de chaque couche tout en conservant une cohésion d'ensemble.

Les interfaces permettent de limiter la propagation des phénomènes extérieurs, d'une couche à la suivante. La figure 3 illustre la réaction d'une multicouche aux sollicitations extérieures. Il est à noter qu'il n'est pas possible de représenter les milliers de couches d'une multicouche. A ce titre, la figure 3 doit être considérée comme une vue schématique d'une multicouche 10 où seulement dix couches ont été représentées.

Dans le cas d'une multicouche 10, les effets d'un choc ou d'un cisaillement, se limitent à la couche concernée. Les couches suivantes n'étant pas ou peu affectées. Ainsi, une fissure apparaissant sur une couche extérieure, voit sa progression stoppée lors du franchissement de la première interface 9. Le phénomène d'écaillage est limité par l'emploi de couches nanométriques. Du fait de la faible épaisseur de chaque couche, il s'apparente alors plus à une érosion ou une ablation des couches successives. D'autre part, au fur à a mesure de l'érosion des couches, et les couches inférieures présentant les même caractéristiques physiques que la couche érodée, l'élément glissant dans son ensemble conserve ses propriétés de glissement, notamment l'uniformité du coefficient de frottement. Enfin, le nombre élevé de couches comprises dans l'élément glissant permet d'assurer une longue durée de vie, même dans un environnement particulièrement hostile.

Fort de ces qualités, le raccord peut être appliqué à des domaines requérant une grande fiabilité, comme l'aéronautique ou l'automobile.

## Revendications

1. Joint (1) destiné, notamment, à relier entre elles deux conduites d'écoulement de fluide ou gazeux, comprenant:
un embout femelle (4) présentant une première extrémité (5),
un embout mâle (2) présentant une deuxième extrémité (3), l'embout mâle (2) étant reçu dans l'embout femelle (4) par recouvrement des deux extrémités le long d'un revêtement de glissement couvrant soit une portion de la première, soit une portion de la deuxième extrémité,
**caractérisé en ce que** ledit revêtement de glissement (6) est interposé entre l'embout mâle et l'embout femelle et comprend un empilement de plusieurs couches d'un matériau intermétallique, l'épaisseur moyenne des couches empilées étant comprise entre 0.5nm et 5nm, de manière à éviter la propagation d'une fissure d'une couche à la couche suivante.

2. Joint (1) selon la revendication 1, dans lequel ledit revêtement de glissement (6) comprend au moins une couche à base de TiAlN.

3. Joint (1) selon la revendication 1 ou 2, dans lequel ledit revêtement de glissement (6) comprend au moins une couche à base de AlCrN.

4. Joint (1) selon une des revendications précédentes, dans lequel le nombre de couches empilées comprises dans ledit revêtement de glissement (6) est compris entre 1000 et 10000, de préférence entre 2500 et 3500 couches.

5. Joint (1) selon une des revendications précédentes, dans lequel l'épaisseur moyenne des couches empilées comprises dans ledit revêtement de glissement (6) est comprise entre 0.7nm et 2nm.

6. Procédé de réalisation d'un élément de glissement d'un joint (1) destiné, notamment, à relier entre elles deux conduites d'écoulement de fluide ou gazeux comprenant:
un embout femelle (4) présentant une première extrémité (5),
un embout mâle (2) présentant une deuxième extrémité (3), l'embout mâle (2) étant reçu dans l'embout femelle (4), et
un soufflet métallique (7) interposé entre ledit embout femelle (4) et ledit embout mâle (2),
dans lequel on dépose un revêtement de glissement (6) sur l'une des faces de l'extrémité (5) de l'embout femelle (4) ou de l'extrémité (3) de l'embout mâle (2) en déposant une succession de couches de matériaux intermétalliques de manière à ce que le revêtement couvre au moins une partie de la zone de contact entre les deux extrémités, et de manière à ce que l'épaisseur moyenne des couches empilées soit comprise entre 0.5nm et 5nm.

7. Procédé de réalisation selon la revendication 6 dans lequel on réalise le dépôt successif des couches du revêtement (6), de manière à ce que l'épaisseur moyenne de chaque couche soit comprise entre 0.7 à 2 nm.

8. Application à un aéronef comprenant au moins un joint tel que décrit dans la revendication 1.

9. Application à un joint rotule, comprenant au moins un joint tel que décrit dans la revendication 1 permettant une rotation selon au moins un axe.

10. Application à un joint linéaire, comprenant au moins un joint tel que décrit dans la revendication 1

## Claims

1. Joint assembly (1) designed, in particular, to connect together two ducts for carrying fluid or gas, comprising:
a female endpiece (4) having a first end (5),
a male endpiece (2) having a second end (3), the male endpiece (2) being designed to be inserted into the female endpiece (4), by overlapping of the first and of the second end along a sliding coating covering, either a portion of the first end, or a portion of the second end,
**characterized in that** said sliding coating (6) is interposed between the male endpiece and the female endpiece, and comprises a stack of several layers of an intermetallic material, the average thickness of a stacked layer being comprised between 0.5 mn and 5 nm, so as to prevent a possible propagation of a crack from one layer to the next layer.

2. Joint assembly (1) according to Claim 1, wherein said sliding coating (6) comprises at least one TiAlN-based layer.

3. Joint assembly (1) according to Claim 1 or 2, wherein said sliding coating (6) comprises at least one AlCrN-based layer.

4. Joint assembly (1) according to one of the preceding claims, wherein the number of stacked layers included in said sliding coating (6) is comprised between 1000 and 10 000, and preferably between 2500 and 3500 layers.

5. Joint assembly (1) according to one of the preceding claims, wherein the average thickness of a stacked layer included in said sliding coating (6) is comprised between 0.7 nm and 2 nm.

6. Method for producing a sliding joint assembly (1) designed, in particular, to connect together two ducts for carrying fluid or gas comprising:
providing a female endpiece (4) having a first end (5),
providing a male endpiece (2) having a second end (3), the male endpiece (2) being designed to be inserted into the female endpiece (4), and
providing a metal bellows (7) interposed between said female endpiece (4) and said male endpiece (2),
in which method a sliding coating (6) is deposited on at least one of an inner face of the first end (5) of the female endpiece (4) or of the outer face of the second end (3) of the male endpiece (2), by depositing a succession of layers of intermetallic materials, so that the coating covers at least a portion of the contact zone between the first end and the second end, and so that the average thickness of a stacked layer is comprised between 0.5 nm and 5 nm.

7. Production method according to Claim 6, wherein the deposition of successive coating layers (6) is carried out so that the average thickness of each layer is between 0.7 and 2 nm.

8. Aircraft comprising at least one joint assembly as described in Claim 1.

9. Swivel joint, comprising at least one joint assembly as described in Claim 1 allowing rotation around at least one axis.

10. Linear joint, comprising at least one joint assembly as described in Claim 1.

## Patentansprüche

1. Gelenk (1), das insbesondere dazu bestimmt ist, zwei Fluid- oder Gasabflussleitungen miteinander zu verbinden, das enthält:
eine Muffe (4), die ein erstes Ende (5) aufweist,
einen Stecker (2), der ein zweites Ende (3) aufweist, wobei der Stecker (2) in der Muffe (4) durch Überlappen der zwei Enden entlang eines Gleitbelags aufgenommen wird, der entweder einen Teil des ersten oder einen Teil des zweiten Endes bedeckt,
**dadurch gekennzeichnet, dass** der Gleitbelag (6) zwischen den Stecker und die Muffe eingefügt ist und eine Stapelung von mehreren Schichten eines intermetallischen Materials enthält, wobei die mittlere Dicke der gestapelten Schichten zwischen 0,5nm und 5nm liegt, um eine Rissausbreitung von einer Schicht zur nächsten Schicht zu hindern.

2. Gelenk (1) nach Anspruch 1, bei dem der Gleitbelag (6) mindestens eine Schicht umfasst, die eine Verbindung auf der Basis von TiAlN enthält.

3. Gelenk (1) nach Anspruch 1 oder 2, bei dem der Gleitbelag (6) mindestens eine Schicht umfasst, die eine Verbindung auf der Basis von AlCrN enthält.

4. Gelenk (1) nach einem der vorhergehenden Ansprüche, bei dem die Anzahl von im Gleitbelag (6) enthaltenen gestapelten Schichten zwischen 1000 und 10000, vorzugsweise zwischen 2500 und 3500 Schichten liegt.

5. Gelenk (1) nach einem der vorhergehenden Ansprüche, bei dem die mittlere Dicke der im Gleitbelag (6) enthaltenen gestapelten Schichten zwischen 0,7nm und 2nm liegt.

6. Verfahren zur Herstellung eines Gleitbestandteils eines Gelenks (1), das insbesondere dazu bestimmt ist, zwei Fluid- oder Gasabflussleitungen miteinander zu verbinden, das enthält:
eine Muffe (4) mit einem ersten Ende (5) aufbringen,
einen Stecker (2) mit einem zweiten Ende (3) aufbringen, wobei der Stecker (2) in der Muffe (4) aufgenommen wird, und
einen metallischen Faltenbalg (7) aufbringen, der zwischen die Muffe (4) und den Stecker (2) eingefügt wird,
bei dem ein mehrschichtiger Gleitbelag (6) auf mindestens eine von der äussere Fläche des Endes (5) der Muffe (4) oder der innere Fläche des Endes (3) des Steckers (2) aufgebracht wird, indem mehrere Schichten intermetallischer Materialien mehrstufig so aufgebracht werden, dass der Belag mindestens einen Teil der Kontaktfläche zwischen den zwei Enden bedeckt, und dass die mittlere Dicke der Schichten zwischen 0,5nm und 5nm liegt.

7. Herstellungsverfahren nach Anspruch 6, bei dem das aufeinanderfolgende Aufbringen der Schichten des Belags (6) so durchgeführt wird, dass die mittlere Dicke jeder Schicht zwischen 0,7 und 2nm liegt.

8. Luftfahrzeug, das mindestens ein wie in Anspruch 1 beschriebenes Gelenk enthält.

9. Kugelgelenk, das mindestens ein wie in Anspruch 1 beschriebenes Gelenk enthält, das eine Drehung gemäß einer Achse erlaubt.

10. Lineargelenk, das mindestens ein wie im Anspruch 1 beschriebenes Gelenk enthält.
